# EUROPÄISCHE PATENTSCHRIFT

(11) **EP 2 764 258 B1**
(45) Veröffentlichungstag und Bekanntmachung des Hinweises auf die Patenterteilung: **17.05.2017**
(21) Anmeldenummer: 12778234.0
(22) Anmeldetag: 05.10.2012
(51) Int. Cl.: F16B 7/04

(54) **VERBINDUNGSELEMENT FÜR EIN TRAGRAHMENSYSTEM**
CONNECTING ELEMENT FOR A SUPPORT FRAME SYSTEM
ÉLÉMENT D'ASSEMBLAGE POUR UN SYSTÈME DE CADRE PORTEUR

(30) Priorität: 07.10.2011 DE 102011115319
(43) Veröffentlichungstag der Anmeldung: 13.08.2014
(73) Patentinhaber: Liebherr-Transportation Systems GmbH & Co. KG, 2100 Korneuburg (AT)
(72) Erfinder: GABRIEL, Roman, A-1020 Wien (AT)
(74) Vertreter: Laufhütte, Dieter
(86) Internationale Anmeldenummer: PCT/EP2012/004185
(87) Internationale Veröffentlichungsnummer: WO 2013/050171

(56) Entgegenhaltungen:
- EP-A1- 0 210 577
- FR-A1- 2 481 387
- US-A- 2 855 255
- US-A- 4 466 756

## Beschreibung

Die vorliegende Erfindung betrifft ein Verbindungselement für ein Tragrahmensystem, sowie ein Tragrahmensystem mit wenigstens zwei Tragrahmenelementen, und mit wenigstens einem Verbindungselement (US 2 855 255 A). Tragrahmensysteme in der vorgesehenen Anwendungsform, wie beispielsweise Skelettragrahmen, werden insbesondere durch Aluminium-Rechteckshohlprofile ausgebildet, die mittels Schweißverbindungen zusammengefügt werden.

Auch bekannt ist der Einsatz sogenannter ITEM-Profile und entsprechender Verbindungselemente oder der Einsatz von Knotenblechen und Winkelelementen.

Als nachteilig bei den bislang bekannten Ansätzen für die Aufgabe von Tragrahmensystem hat sich herausgestellt, dass die bekannten Ansätze aufwändig und teuer bzw. auch teilweise nur mit großem Aufwand ohne entsprechende Vorrichtungen zueinander positionierbar sind. Auch ist es nicht ohne Weiteres möglich, die Profile bekannter Tragrahmensysteme spanlos, prozess- und vibrationssicher miteinander lösbar oder unlösbar zu verbinden.

Es ist daher die Aufgabe der vorliegenden Erfindung, ein Verbindungselement und ein Tragrahmensystem der eingangs genannten Art in vorteilhafter Weise weiterzubilden, insbesondere dahingehend, dass Tragrahmenelemente einfach und sicher miteinander verbunden werden können.

Diese Aufgabe wird erfindungsgemäß gelöst durch ein Verbindungselement mit den Merkmalen des Anspruchs 1. Danach ist unter Anderem vorgesehen, dass ein Verbindungselement für ein Tragrahmensystem wenigstens zwei im Wesentlichen U-förmig ausgebildete Teilelemente umfasst, die gegengleich zusammenfügbar oder zusammengefügt sind, insbesondere gegengleich ineinandersteckbar oder ineinandergesteckt sind, wobei das erste Teilelement mit wenigstens einem Befestigungselement verbindbar oder verbunden ist und wobei das zweite Teilelement mit wenigstens einem Positionierungselement verbindbar oder verbunden ist und/oder wenigstens ein Positionierungselement aufweist.

Dadurch wird es vorteilhaft möglich, Tragrahmenelemente eines Tragsystems einfach und sicher miteinander verbinden zu können. Insbesondere ist eine eindeutige Positionierbarkeit zueinander ohne sonstige Vorrichtung möglich und dies auch dann, wenn es sich beispielsweise um Tragrahmenelemente unterschiedlicher Dimensionen und Materialien handelt. Die Tragrahmenelemente können beispielsweise Rechteck-Hohlprofile unterschiedlicher Dimensionen und Materialien sein.

Eine spanlose, prozess- und vibrationssichere Verbindung der Tragrahmenelemente ist möglich, wobei die Tragrahmenelemente unlösbar oder lösbar mittels des Verbindungselementes miteinander verbindbar sind. Auch Winkelverbindungen von 0° bis 360° sind stufenlos möglich, da die U-förmig ausgebildeten Teilelemente durch deren Form entsprechend positionierbar und einstellbar sind.

Es ist möglich, dass das Befestigungselement wenigstens einen Schließringbolzen, wenigstens eine Mutter und/oder wenigstens eine Schraube umfasst und/oder dass das Befestigungselement wenigstens ein Schließringbolzen, wenigstens eine Mutter und/oder wenigstens eine Schraube ist.

Des Weiteren kann vorgesehen sein, dass wenigstens ein Befestigungseinsatz vorgesehen ist, mittels dessen das Befestigungselement befestigbar ist und/oder dass ein Befestigungsstift vorgesehen ist, mittels dessen das Befestigungselement, insbesondere der Schließringbolzen befestigbar und fixierbar ist.

Außerdem ist denkbar, dass der Befestigungseinsatz wenigstens eine Aufnahme, insbesondere einen Innen-Sechskant, aufweist, in die die Mutter oder die Schraube einsetzbar ist. In die Aufnahme, insbesondere in den Innen-Sechskant kann eine entsprechende Mutter, die einen Außen-Sechskant aufweist, oder eine Schraube mit einem Kopf mit einem Außen-Sechskant eingesetzt werden. Somit kann die Mutter oder Schraube durch den Befestigungseinsatz in Position und Lage fixiert werden. Der Befestigungseinsatz kann somit auch ein Montagedrehmoment vom Befestigungselement auf das Verbindungselement übertragen.

Ferner kann vorgesehen sein, dass der Befestigungseinsatz wenigstens zwei nasenartige Vorsprünge aufweist und dass das zweite U-förmige Teilelement wenigstens zwei Aufnahmen aufweist, wobei die nasenartigen Vorsprünge in die Aufnahmen einsetzbar sind und hierdurch insbesondere der Befestigungseinsatz, im zusammengesetzten Zustand des Verbindungselementes im Wesentlichen positionstreu und klemmend haltbar ist.

Es ist weiter denkbar, dass das Positionierungselement wenigstens einen Positionierzapfen umfasst und/oder dass das Positionierungselement wenigstens ein Positionierzapfen ist.

Darüber hinaus kann vorgesehen sein, dass das erste Teilelement und das zweite Teilelement jeweils wenigstens zwei durchgehende Nietbohrungen pro Flanke aufweisen, die im zusammengesetzten Zustand des Verbindungselementes fluchten.

Des Weiteren betrifft die vorliegende Erfindung ein Tragrahmensystem mit den Merkmalen des Anspruchs 8. Danach ist vorgesehen, dass ein Tragrahmensystem mit wenigstens zwei Tragrahmenelementen und mit wenigstens einem Verbindungselement nach einem der Ansprüche 1 bis 7 versehen ist, wobei mittels des Verbindungselementes die Tragrahmenelemente verbindbar oder verbunden sind.

Ferner kann vorgesehen sein, dass ein Tragrahmenelement Bohrungen aufweist, in die der wenigstens eine Positionierzapfen einsetzbar oder eingesetzt ist bzw. in die Positionierzapfen einsetzbar oder eingesetzt sind.

Außerdem ist möglich, dass ein Tragrahmenelement Nietbohrungen aufweist und dass durch die Nietbohrungen Nieten in die Nietbohrungen des Verbindungselementes einsetzbar oder eingesetzt sind.

Weitere Einzelheiten und Vorteile der Erfindung sollen nun anhand eines in der Zeichnung dargestellten Ausführungsbeispiels näher erläutert werden.

Es zeigen:
- Fig. 1a-c:: ein erstes Ausführungsbeispiel eines variablen Verbindungselementes gemäß der Erfindung;
- Fig. 2a-c:: mehrere Ansichten des in den Figuren 1a-c dargestellten Verbindungselementes;
- Fig. 3a-d:: mehrere Variationen des in den Figuren 1a-c dargestellten Verbindungselementes sowie des in den Figuren 1a-2c dargestellten Verbindungselementes;
- Fig. 4a-c:: ein zweites Ausführungsbeispiel eines variablen Verbindungselementes gemäß der Erfindung;
- Fig. 5a-c:: ein drittes Ausführungsbeispiel eines variablen Verbindungselementes gemäß der Erfindung;
- Fig. 6:: eine schematische Schnittdarstellung der Einbausituation eines Verbindungselementes mit Darstellung der stufenlosen Winkelvarianz;
- Fig. 7a-c:: perspektivische Darstellungen verschiedener Montagesituationen des Verbindungselementes; und
- Fig. 8:: eine schematische Darstellung des Kraftflusskonzeptes des montierten Verbindungselementes.

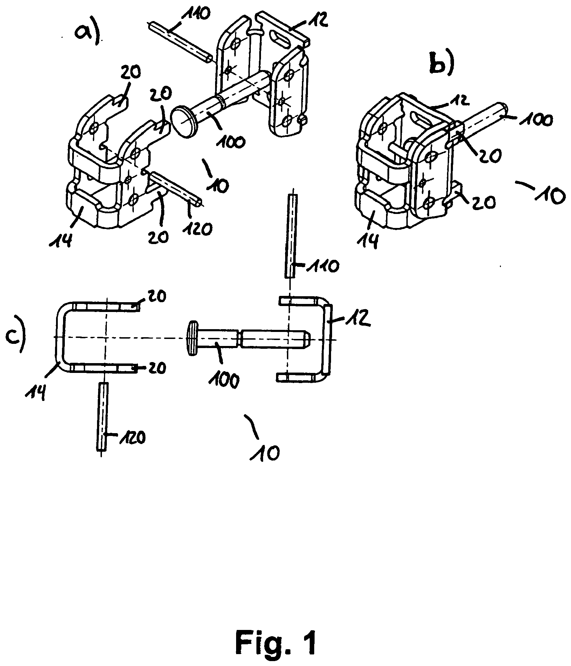

Die Figur 1a-c zeigen in perspektivischer Ansicht, sowohl in Explosionsdarstellung als auch im zusammengesetzten Zustand, ein Ausführungsbeispiel eines variablen Verbindungselementes 10 mit einem Schließringbolzen 100 gemäß der Erfindung.

Das variable Verbindungselement 10 dient dabei grundsätzlich als ein Universal-Verbindungselement für vorwiegend Rechteck-Hohlprofile.

Dabei ist vorteilhafterweise pro Hohlprofil-Querschnittsgröße nur eine einzige Verbindungselementgröße erforderlich, um unlösbare oder lösbare Winkelverbindungen von 0° bis 360° stufenlos realisieren zu können.

Tragrahmenskelette, welche auf diesem variablen Profil-Verbindungs-System basieren, können direkt mit Beplankungen, Einschubelementen, Moduleinheiten und dergleichen versehen werden, da die Verbindungselemente unsichtbar in die Hohlprofile integriert sind und damit ebene, durchgehende, absatz- und überstandsfreie Auflageflächen realisiert werden können.

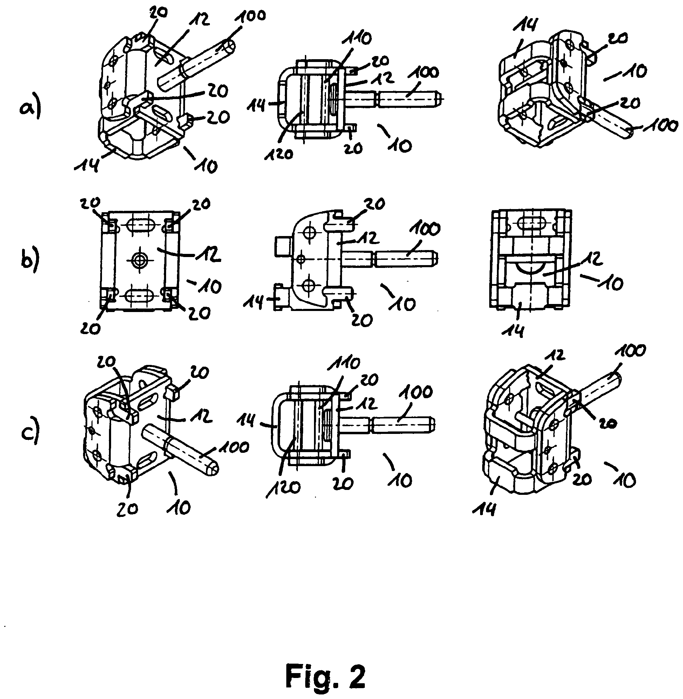

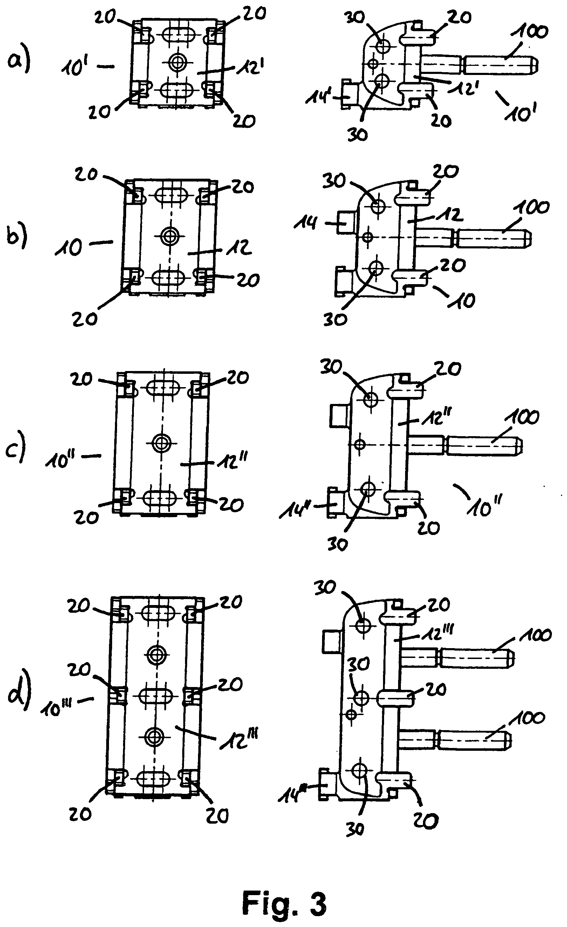

Jedes Verbindungselement 10 (vgl. auch Figur 2 und Figur 3) besteht im wesentlichen aus zwei U-förmig ausgebildeten Teilelementen 12 und 14, welche gegengleich ineinandergesteckt werden. Das vordere Teilelement 12 dient zur Aufnahme des Befestigungselementes, hier des Schließringbolzens 100.

Das hintere Teilelement 14 ist, je nach Verbindungselementgröße, mit jeweils zwei oder drei Positionierzapfen pro Seite ausgestattet. Die in den Figuren 1a bis 3c dargestellten Ausführungsbeispiele weisen dabei je zwei Positionierzapfen 20 pro Seite auf, während das in Figur 3d gezeigte Ausführungsbeispiel mit je drei Positionierzapfen 20 pro Seite ausgestattet ist.

Die kleineren Verbindungselemente 10, 10', 10", 10"', welche überwiegend eingesetzt werden, sind mit jeweils einem Befestigungselement 100, vier Positionierzapfen 20 und zwei durchgehenden Nietbohrungen 30 pro Flanke ausgestattet, die größeren Dimensionen mit zwei Befestigungselementen 100, sechs Zapfen 20 und drei Nietbohrungen 30 pro Flanke, wie dies beispielsweise in Figur 3a-d gezeigt ist.

Die Positionierzapfen 20 ragen nach dem Zusammenstecken der beiden Teilelemente 12, 14 an der Vorderseite heraus.

Der vordere, innenliegende Befestigungsstift 110 dient, beim Einsatz von Schließringbolzen als Befestigungselement, beispielsweise als Gegenhalter, wie dies in Figur 1 gezeigt ist. Der hintere, innenliegende Befestigungsstift 120 dient, ebenso wie auch der vordere, innenliegende Befestigungsstift 110 zur Fixierung der Teilelemente 12 und 14.

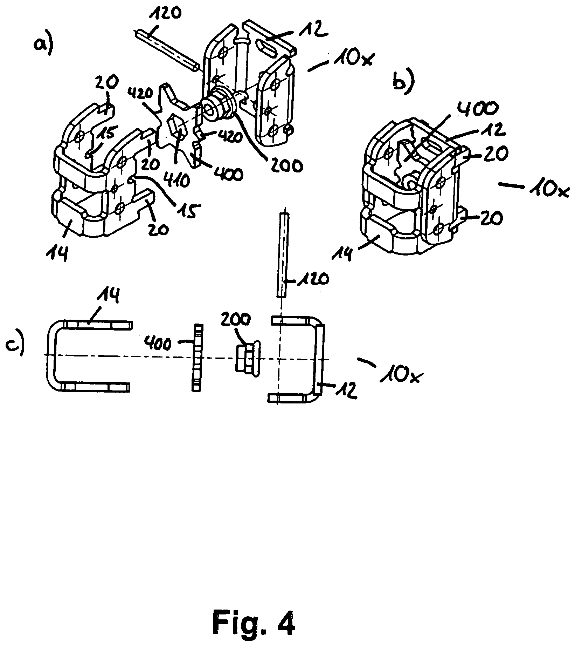

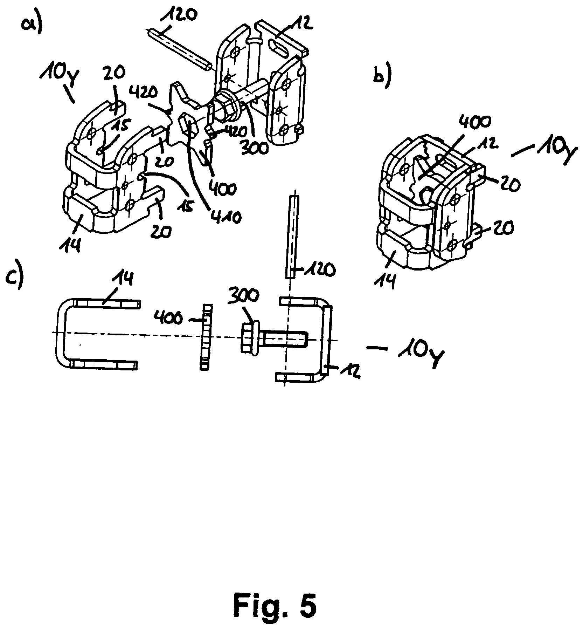

Bei der Verwendung von Flanschmuttern 200 (vgl. Figuren 4a-c) oder Flanschschrauben 300 (vgl. Figuren 5a-c) als Befestigungselement 200 bzw. 300 wird statt dem vorderen, innenliegenden Befestigungsstift 110 zur Befestigung von der Flanschmutter 200 bzw. der Flanschschraube 300 ein Befestigungseinsatz 400 verwendet, der für beide Anwendungsfälle baugleich sein kann. Dieser nimmt über einen Innen-Sechskant 410 das Befestigungselement 200 oder 300 auf und fixiert dieses in Position und Lage. Der Befestigungseinsatz 400 überträgt auch das Montagedrehmoment vom Befestigungselement 200 bzw. 300 auf das Verbindungselement 10x bzw. 10y.

Der Befestigungseinsatz 400 weist zwei nasenartige Vorsprünge 420 auf, die in entsprechende Aufnahmen 15 des zweiten U-förmigen Teilelementes 14 eingesetzt werden können und den Befestigungseinsatz 400 im zusammengesetzten Zustand im Wesentlichen positionstreu und klemmend halten (vgl. Figuren 4a-c bzw. 5a-c).

Der hintere Stift 120 fixiert die beiden U-förmigen Teilelemente 12 und 14 des Verbindungselementes 10x bzw. 10y, das insoweit baugleich dem ersten in den Figuren 1a bis 2c gezeigten Ausführungsbeispiel ist, nach dem Zusammenstecken.

Beide Teilelemente 12, 14 weisen an deren Flanken jeweils zwei bis drei durchgehende Nietbohrungen 30 auf, welche sich zueinander nach dem Zusammenbau in Deckung befinden.

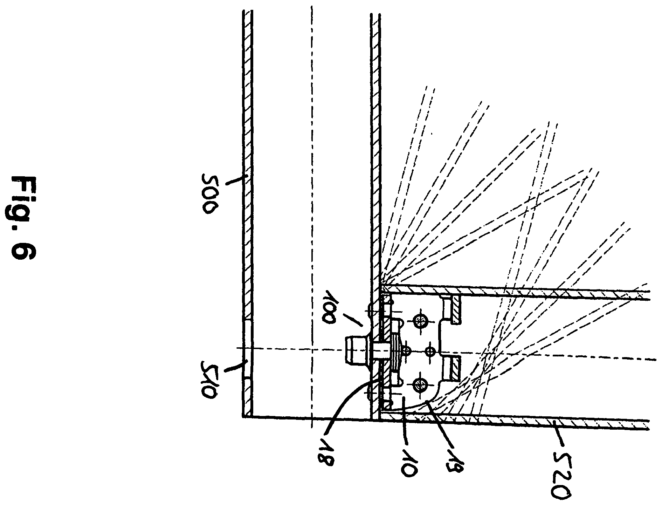

Das Verbindungselement 10 besitzt an dessen unterer Stirnseite eine ebene Auflagefläche 18, welche die Referenzebene für den Einbau bzw. die Verbindung zweier Hohlprofilelemente 500, 520 darstellt. Die obere Stirnseite ist mit einer Abrundung 19 versehen, deren Mittelachse sich aus dem Schnittpunkt der Referenzebene mit der vorderen Ebene ergibt. Diese Abrundung gewährleistet den stufenlosen Einbau desselben Verbinders in einem Winkel von 0° bis 90° und somit die Umsetzung von Winkelverbindungen von 0° bis 360° (vgl. Figur 6). Um das Befestigungselement 100 montieren zu können, weist das Hohlprofilelement 500 eine entsprechende Zugangsöffnung 510 auf, über die mittels eines Werkzeuges das Befestigungselement 100 bzw. bei Einsatz von Befestigungselementen 200 bzw. 300 entsprechend diese montierbar sind.

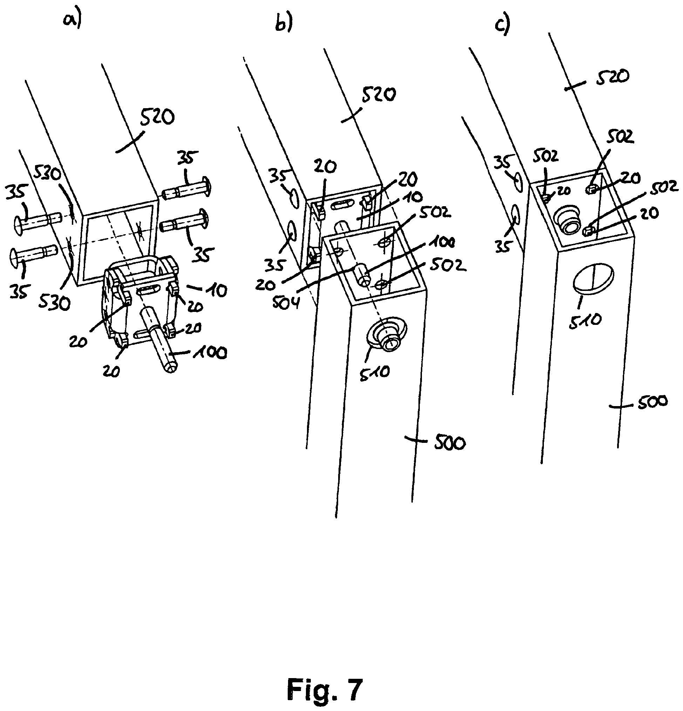

Bei jeder Verbindungsherstellung (vgl. Figuren 7a-c) wird das eine Hohlprofilelement 520 mit dessen Stirnfläche auf die vorgesehene Mantelaußenfläche des anderen Hohlprofilelementes 500 gepresst. Jenes Hohlprofilelement 520, welches mit der Stirnseite aufgesetzt wird, enthält dabei das Verbindungselement 10. Dieses wird stirnseitig, wobei die Positionierzapfen 20 und der Schließringbolzen 100 nach außen zeigen, in das Hohlprofil 520 hineingeschoben.

Die Fixierung erfolgt beidseitig mittels Nietverbindungen durch die dafür vorgesehenen, durchgehenden und deckungsgleichen Nietbohrungen 30, 530 im Hohlprofil und in den Flanken des Verbindungselementes 10 mit Nieten 35. Die vordere Fläche des Verbindungselementes 10 ist zur Stirnseite des Hohlprofils 520 nach innen versetzt. Die Positionierzapfen 20 ragen aus dem Hohlprofilelement 520 heraus.

In der Mantelfläche des Gegenhohlprofilelementes 500 befindet sich das zum Verbindungselement 10 passende Gegenbohrbild. Dabei dienen die äußeren Bohrungen 502 als Führungen für die Positionierzapfen 20 und gewährleisten damit die eindeutige und genaue Lage der Hohlprofilelemente 500, 520 zueinander, wie auch eine Verdrehsicherung. Die mittlere Bohrung 504 des Bohrbildes dient zur Aufnahme des Befestigungselementes 100 des Verbindungselements 10.

In der dem Bohrbild gegenüberliegenden Mantelfläche desselben Hohlprofilelementes 500 befindet sich die kreisförmige Montageöffnung 510. Bei mehreren Befestigungselementen 100 (vgl. Fig. 3d) können auch mehrere Montageöffnungen 510 vorgesehen sein. Diese ist/sind konzentrisch zu der/den mittleren Bohrung/en des Bohrbildes für das/die Befestigungselement/e 100 angeordnet.

Nach dem Zusammenstecken der beiden Hohlprofilelemente 500, 520 werden diese mit Hilfe der Befestigungselemente 100 mit einer genau definierten Vorspannkraft unlösbar (bei Schließringbolzeneinsatz) bzw. lösbar (bei Schrauben- bzw. Mutterneinsatz) miteinander verbunden.

Dabei wird durch die jeweilige Montageöffnung das zum Befestigungselement zugehörige Gegenelement eingebracht (beispielsweise Schließring bei einem Schließringbolzen, eine Schraube bei einer Mutter, bzw. eine Mutter bei einer Schraube) und mit dem dazu passenden Werkzeug die Verbindung hergestellt.

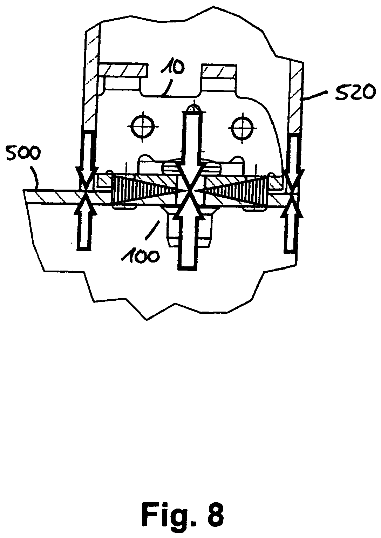

Fig. 8 zeigt eine schematische Darstellung des Kraftflusskonzeptes des montierten Verbindungselementes 10, das die die beiden Hohlprofile 500 und 520 verbindet. Durch die eingebrachte Vorspannkraft wird jener Spalt geschlossen, welcher, bedingt durch den Einbauversatz des Verbindungselementes im Hohlprofil zwischen der vorderen Fläche des Verbinders und der Mantelfläche des Gegenhohlprofils existiert. Diese Vorspannkraft wird aufgrund dieses Spaltes direkt in die Kontaktfläche zwischen den beiden Hohlprofilelementen 500, 520 übertragen und erzeugt damit jenen Anpressdruck, welcher für die Stabilität der Verbindung notwendig ist.

## Patentansprüche

1. Verbindungselement (10, 10', 10", 10"', 10x, 10y) für ein Tragrahmensystem, mit wenigstens zwei Tragrahmenelementen (500, 520), umfassend wenigstens zwei, im Wesentlichen U-förmig ausgebildete, Teilelemente (12, 14), die gegengleich zusammenfügbar oder zusammengefügt sind, nämlich gegengleich ineinandersteckbar oder ineinandergesteckt sind, wobei das erste Teilelement (12) mit wenigstens einem Befestigungselement (100, 200, 300) verbindbar oder verbunden ist und wobei das zweite Teilelement (14) mit wenigstens einem Positionierungselement (20) in Verbindung steht und/oder wenigstens ein Positionierungselement (20) aufweist, wobei das wenigstens eine Positionierungselement (20) nach dem Zusammenfügen oder Zusammenstecken der beiden Teilelemente (12, 14) an der Vorderseite herausragt.

2. Verbindungselement (10, 10', 10", 10"', 10x, 10y) nach Anspruch 1, **dadurch gekennzeichnet, dass** das Befestigungselement wenigstens einen Schließringbolzen (100), wenigstens eine Mutter (200) oder wenigstens eine Schraube (300) aufweist.

3. Verbindungselement (10, 10', 10", 10"', 10x, 10y) nach Anspruch 1 oder 2, **dadurch gekennzeichnet, dass** wenigstens ein Befestigungseinsatz (400) vorgesehen ist, mittels dessen das Befestigungselement befestigbar ist und/oder dass ein Befestigungsstift (110) vorgesehen ist, mittels dessen das Befestigungselement, insbesondere der Schließringbolzen (100) befestigbar und fixierbar ist.

4. Verbindungselement (10, 10', 10", 10"', 10x, 10y) nach Anspruch 3, insbesondere nach den Ansprüchen 2 und 3, **dadurch gekennzeichnet, dass** der Befestigungseinsatz (400) wenigstens eine Aufnahme, insbesondere einen Innen-Sechskant (410), aufweist, in die die Mutter (200) oder die Schraube (300) einsetzbar ist.

5. Verbindungselement (10, 10', 10", 10"', 10x, 10y) nach Anspruch 3 oder 4, **dadurch gekennzeichnet, dass** der Befestigungseinsatz (400) wenigstens zwei nasenartige Vorsprünge (420) aufweist und dass das zweite U-förmige Teilelement (14) wenigstens zwei Aufnahmen (15) aufweist, wobei die nasenartigen Vorsprünge (420) in die Aufnahmen (15) einsetzbar sind und hierdurch insbesondere der Befestigungseinsatz (400) im zusammengesetzten Zustand des Verbindungselementes (10, 10', 10", 10"', 10x, 10y) im Wesentlichen positionstreu und klemmend haltbar ist.

6. Verbindungselement (10, 10', 10", 10"', 10x, 10y) nach einem der vorhergehenden Ansprüche, **dadurch gekennzeichnet, dass** das Positionierungselement (20) wenigstens einen Positionierzapfen (20) umfasst und/oder dass das Positionierungselement (20) wenigstens ein Positionierzapfen (20) ist.

7. Verbindungselement (10, 10', 10", 10"', 10x, 10y) nach einem der vorhergehenden Ansprüche, **dadurch gekennzeichnet, dass** das erste Teilelement (12) und das zweite Teilelement (14) jeweils wenigstens zwei durchgehende Nietbohrungen (30) pro Flanke aufweist, die im zusammengesetzten Zustand des Verbindungselementes (10, 10', 10", 10"', 10x, 10y) fluchten.

8. Tragrahmensystem mit wenigstens zwei Tragrahmenelementen (500, 520) und mit wenigstens einem Verbindungselement (10, 10', 10", 10"', 10x, 10y) nach einem der Ansprüche 1 bis 7, wobei mittels des Verbindungselementes (10, 10', 10", 10"', 10x, 10y) die Tragrahmenelemente (500, 520) verbindbar oder verbunden sind.

9. Tragrahmensystem nach Anspruch 8, **dadurch gekennzeichnet, dass** ein Tragrahmenelement (500) Bohrungen (502) aufweist, in die der wenigstens eine Positionierzapfen (20) einsetzbar oder eingesetzt ist bzw. in die Positionierzapfen (20) einsetzbar oder eingesetzt sind.

10. Tragrahmensystem nach einem der vorangegangenen Ansprüche, **dadurch gekennzeichnet, dass** das Verbindungselement einen Spalt zum Gegenprofil aufweist, welcher bei Montage durch die Vorspannkraft geschlossen wird.

11. Tragrahmensystem nach Anspruch 8, 9 oder 10, **dadurch gekennzeichnet, dass** ein Tragrahmenelement (520) Nietbohrungen (530) aufweist und dass durch die Nietbohrungen (530) Nieten (35) in die Nietbohrungen (30) des Verbindungselementes (10, 10', 10", 10"', 10x, 10y) einsetzbar oder eingesetzt sind.

## Claims

1. A connection element (10, 10', 10", 10"', 10x, 10y) for a support frame system with at least two support frame elements (500, 520), comprising at least two part elements (12, 14) which are configured substantially in U form, which can be or are joined together in mirror-inverted form, namely can be or are plugged into one another in mirror-inverted form, with the first part element (12) being connectable or connected to at least one fastening element (100, 200, 300) and with the second part element (14) being connected to at least one positioning element (20) and/or having at least one positioning element (20), with the at least one positioning element (20) protruding at the front side after the joining of the two part elements (12, 14) or plugging the two part elements (12, 14) into one another,

2. A connection element (10, 10', 10", 10"', 10x, 10y) in accordance with claim 1, **characterized in that** the fastening element comprises at least one closing eye bolt (100), at least one nut (200) or at least one screw (300).

3. A connection element (10, 10', 10", 10"', 10x, 10y) in accordance with claim 1 or claim 2, **characterized in that** at least one fastening attachment (400) is provided by means of which the fastening element can be fastened; and/or **in that** a fastening pin (110) is provided by means of which the fastening element, in particular the closing eye bolt (100), can be fastened and fixed.

4. A connection element (10, 10', 10", 10"', 10x, 10y) in accordance with claim 3, in particular in accordance with claims 2 and 3, **characterized in that** the fastening attachment (400) has at least one receiver, in particular a hexagon socket (410), into which the nut (200) or the screw (300) can be inserted.

5. A connection element (10, 10', 10", 10"', 10x, 10y) in accordance with claim 3 or claim 4, **characterized in that** the fastening attachment (400) has at least two nose-like projections (420); and **in that** the second U-shaped part element (14) has at least two receivers (15), with the nose-like projections (420) being insertable into the receivers (15) and hereby in particular the fastening attachment (400) being able to be held substantially in the correct position and in a clamping manner in the assembled state of the connection element (10, 10', 10", 10"', 10x, 10y).

6. A connection element (10, 10', 10", 10"', 10x, 10y) in accordance with one of the preceding claims, **characterized in that** the positioning element (20) comprises at least one positioning spigot (20); and/or **in that** the positioning element (20) is at least one positioning spigot (20).

7. A connection element (10, 10', 10", 10"', 10x, 10y) in accordance with one of the preceding claims, **characterized in that** the first part element (12) and the second part element (14) each have at least two throughgoing rivet bores (30) per flank which are aligned in the assembled state of the connection element (10, 10', 10", 10"', 10x, 10y).

8. A support frame system having at least two support frame elements (500, 520) and having at least one connection element (10, 10', 10", 10"', 10x, 10y) in accordance with one of the claims 1 to 7, with the support frame elements (500, 520) being connectable or connected by means of the connection element (10, 10', 10", 10"', 10x, 10y).

9. A support frame system in accordance with claim 8, **characterized in that** a support frame element (500) has bores (502) into which the at least one positioning spigot (20) can be or is inserted or into which positioning spigots (20) can be or are inserted.

10. A support frame system in accordance with one of the preceding claims, **characterized in that** the connection element has a gap toward the counter-section which is closed by the preloading force on assembly.

11. A support frame system in accordance with claim 8, claim 9, or claim 10, **characterized in that** a support frame element (520) has rivet bores (530); and **in that** rivets (35) can be or are inserted through the rivet bores (530) into the rivet bores (30) of the connection element (10, 10', 10", 10"', 10x, 10y).

## Revendications

1. Élément d'assemblage (10, 10', 10", 10"', 10x, 10y) pour un système de cadre porteur incluant au moins deux éléments de cadre porteur (500, 520), comprenant au moins deux sous-éléments (12, 14) réalisés sensiblement en forme de U, qui peuvent être ou sont joints en vis-à-vis, à savoir peuvent être ou sont emboîtés l'un dans l'autre en vis-à-vis, le premier sous-élément (12) pouvant être ou étant assemblé à au moins un élément de fixation (100, 200, 300) et le second sous-élément (14) étant en liaison avec au moins un élément de positionnement (20) et/ou comportant au moins un élément de positionnement (20), l'au moins un élément de positionnement (20) dépassant sur la face avant après la jonction ou l'emboîtement des deux sous-éléments (12, 14).

2. Élément d'assemblage (10, 10', 10", 10"', 10x, 10y) selon la revendication 1, **caractérisé en ce que** l'élément de fixation comporte au moins un boulon à anneau de blocage (100), au moins un écrou (200) ou au moins une vis (300).

3. Élément d'assemblage (10, 10', 10", 10"', 10x, 10y) selon la revendication 1 ou 2, **caractérisé en ce qu'**au moins un insert de fixation (400) est prévu, au moyen duquel l'élément de fixation peut être fixé et/ou **en ce qu'**une tige de fixation (110) est prévue, au moyen de laquelle l'élément de fixation, en particulier le boulon à anneau de blocage (100) peut être fixé et immobilisé.

4. Élément d'assemblage (10, 10', 10", 10"', 10x, 10y) selon la revendication 3, en particulier selon les revendications 2 et 3, **caractérisé en ce que** l'insert de fixation (400) comporte au moins un logement, en particulier un creux hexagonal (410), dans lequel l'écrou (200) ou la vis (300) peut être introduit(e).

5. Élément d'assemblage (10, 10', 10", 10"', 10x, 10y) selon la revendication 3 ou 4, **caractérisé en ce que** l'insert de fixation (400) comporte au moins deux saillies (420) de type ergot et **en ce que** le second sous-élément (14) en forme de U comporte au moins deux logements (15), les saillies (420) de type ergot pouvant être introduites dans les logements (15) et l'insert de fixation (400) pouvant ainsi en particulier être maintenu par serrage et sensiblement sans changer de position dans l'état assemblé de l'élément d'assemblage (10, 10', 10", 10"', 10x, 10y).

6. Élément d'assemblage (10, 10', 10", 10"', 10x, 10y) selon l'une des revendications précédentes, **caractérisé en ce que** l'élément de positionnement (20) comprend au moins un tenon de positionnement (20) et/ou **en ce que** l'élément de positionnement (20) est au moins un tenon de positionnement (20).

7. Élément d'assemblage (10, 10', 10", 10"', 10x, 10y) selon l'une des revendications précédentes, **caractérisé en ce que** le premier sous-élément (12) et le second sous-élément (14) comportent respectivement au moins deux trous de rivet (30) traversants par côté, qui s'alignent dans l'état assemblé de l'élément d'assemblage (10, 10', 10", 10"', 10x, 10y).

8. Système de cadre porteur comprenant au moins deux éléments de cadre porteur (500, 520) et comprenant au moins un élément d'assemblage (10, 10', 10", 10"', 10x, 10y) selon l'une des revendications 1 à 7, dans lequel les éléments de cadre porteur (500, 520) peuvent être ou sont assemblés au moyen de l'élément d'assemblage (10, 10', 10", 10"', 10x, 10y).

9. Système de cadre porteur selon la revendication 8, **caractérisé en ce qu'**un élément de cadre porteur (500) comporte des trous (502) dans lesquels l'au moins un tenon de positionnement (20) peut être ou est inséré ou dans lesquels des tenons de positionnement (20) peuvent être ou sont insérés.

10. Système de cadre porteur selon l'une des revendications précédentes, **caractérisé en ce que** l'élément d'assemblage comporte un jeu par rapport au profilé opposé, qui est fermé par la force de précontrainte lors du montage.

11. Système de cadre porteur selon la revendication 8, 9 ou 10, **caractérisé en ce qu'**un élément de cadre porteur (520) comporte des trous de rivet (530) et **en ce que** par les trous de rivet (530), des rivets (35) peuvent être ou sont insérés dans les trous de rivet (30) de l'élément d'assemblage (10, 10', 10", 10"', 10x, 10y).
